# EUROPEAN PATENT APPLICATION

(11) **EP 1 793 015 A2**
(43) Date of publication of application: **06.06.2007**
(21) Application number: 06125310.0
(22) Date of filing: 04.12.2006
(51) Int. Cl.: C23C 28/04, C23C 26/00

(54) **Corrosion inhibiting ceramic coating and method of application**

(30) Priority: 02.12.2005 US 293448
(71) Applicant: General Electric Company, Schenectady, NY 12345 (US)
(72) Inventor: Hazel, Brian Thomas, West Chester OH 45069 (US); Kool, Lawrence B., Clifton Park NY 12065 (US)
(74) Representative: Bedford, Grant Richard

(57) **Abstract**

A corrosion resistant coating for engine components such as turbine disks, turbine seal elements and turbine shafts. This coating may also find application to other turbine components that are subjected to high temperatures and corrosive environments, such as turbine components located within or on the boundary of the gas fluid flow path, including for example turbine blades, turbine vanes, liners and exhaust flaps. The corrosion resistant coating of the present invention in service on a gas turbine component includes a glassy ceramic matrix wherein the glassy matrix is silica-based and particles selected from the group consisting of refractory oxide particles, MCrAlX particles and combinations of these particles, substantially uniformly distributed within the matrix. The refractory oxide and/or the MCrAlX provides the coating with corrosion resistance. Importantly the coating of the present invention has a coefficient of thermal expansion (CTE) greater than alumina. The CTE of the coating is sufficiently close to the substrate material, that is, the component to which it is applied, such that the coating does not spall after frequent engine cycling at elevated temperature.

## Description

The present invention is directed to an anti-corrosion coating for use on turbine engine components subjected to moderate temperatures and corrosive environments and methods of applying the coating to turbine engine components.

In the compressor portion of an aircraft gas turbine engine, atmospheric air is compressed to 10-25 times atmospheric pressure, and adiabatically heated to 800° - 1250° F in the process. This heated and compressed air is directed into a combustor, where it is mixed with fuel. The fuel is ignited, and the combustion process heats the gases to very high temperatures, in excess of 3000° F. These hot gases pass through the turbine, where rotating turbine wheels extract energy to drive the fan and compressor of the engine, and the exhaust system, where the gases supply thrust to propel the aircraft. To improve the efficiency of operation of the aircraft engine, combustion temperatures have been raised. Of course, as the combustion temperature is raised, steps must be taken to prevent degradation of engine components directly and indirectly as a result of the higher operating temperatures.

The requirements for enhanced performance continue to increase for newer engines and modifications of proven designs, as higher thrusts and better fuel economy are among the performance demands. To improve the performance of engines, the combustion temperatures have been raised to very high temperatures. This can result in higher thrusts and/or better fuel economy. These combustion temperatures have become sufficiently high that even superalloy components not within the combustion path have been subject to degradation. These superalloy components have been subject to degradation by mechanisms not previously generally experienced, creating previously undisclosed problems that must be solved. One recent problem that has been discovered during refurbishment of high performance aircraft engines has been the pitting of turbine disks, seals and other components that are supplied with cooling air. The cooling air includes ingested particulates such as dirt, volcanic ash, fly ash, concrete dust, sand, sea salt as well as metal, sulfates, sulfites, chlorides, carbonates, various and sundry oxides and/or various salts in either particulate or gaseous form. These materials are deposited on substrate surfaces. When deposited on metallic surfaces, these materials can interact with one another and with the metallic surface to corrode the surface, which is accelerated at elevated temperatures. The materials used in turbine engines are typically selected on high temperature properties, including their ability to resist corrosion, even these materials will degrade under severe conditions at elevated temperatures. On investigation of the observed pitting problem, it has been discovered that the pitting is caused by a formation of a corrosion product as a result of the ambient airborne foreign particulate and gaseous matter that is deposited on the disks, seals or other components as a result of the flow of cooling air containing it. This deposition, along with the more elevated temperature regimes experienced by these engine components, has resulted in the formation of the corrosion products. It should be noted that the corrosion products are not the result of exposure of the engine components to the hot gases of combustion, normally associated with oxidation and corrosion products from contaminants in the fuel. The seals, turbine disks and other components under consideration and discussed herein generally are designed so that, if a leak is present, the air will leak in the direction of the flow of the hot gases of combustion and not in the direction of the components under consideration.

Because the corrosion products are the result of exposure of the engine components to cooling air drawn from ambient air environments, it is not uniform from engine to engine as aircraft visit different geographic locations with different and distinct atmospheric conditions. For example, some planes are exposed to salt water environments, while others may be subject to air pollutants from highly industrial regions. The result is that some components experience more advanced corrosion than other components.

The corrosion was not unanticipated. But the remedial efforts initiated during the production were ineffective. Various coatings have been suggested and attempted to mitigate corrosion concerns. One is a phosphate-based set forth in U.S. Patent Application No. 11/011,695 entitled CORROSION RESISTANT COATING COMPOSITION, COATED TURBINE COMPONENT AND METHOD FOR COATING SAME filed on December 15, 2004, assigned to the assignee of the present application and incorporated herein by reference. Others include aqueous corrosion resistant coating compositions comprising phosphate/chromate binder systems and aluminum/alumina particles. See, for example, U.S. Pat. No. 4,606,967 (Mosser), issued August 19, 1986 (spheroidal aluminum particles); and U.S. Pat. No. 4,544,408 (Mosser et al), issued October 1, 1985 (dispersible hydrated alumina particles). Corrosion resistant diffusion coatings can also be formed from aluminum or chromium, or from the respective oxides (i.e., alumina or chromia). See, for example, commonly assigned U.S. Pat. No. 5,368,888 (Rigney), issued November 29, 1994 (aluminide diffusion coating); and commonly assigned U.S. Patent 6,283,715 (Nagaraj et al), issued September 4, 2001 (chromium diffusion coating). A number of corrosion-resistant coatings have also been specifically considered for use on turbine disk/shaft and seal elements. See, for example, U.S. Patent Application 2004/0013802 A1 (Ackerman et al), published January 22, 2004 (metal-organic chemical vapor deposition of aluminum, silicon, tantalum, titanium or chromium oxide on turbine disks and seal elements to provide a protective coating). These prior corrosion resistant coatings can have a number of disadvantages, including: (1) possibly adversely affecting the fatigue life of the turbine disks/shafts and seal elements, especially when these prior coatings diffuse into the underlying metal substrate; (2) potential coefficient of thermal expansion (CTE) mismatches between the coating and the underlying metal substrate that can make the coating more prone to spalling; and (3) more complicated and expensive processes (e.g., chemical vapor deposition) for applying the corrosion resistant coating to the metal substrate. Still another, a corrosion mitigation coating that has been applied to certain components has proven to be ineffective. This coating, an alumina pigment in a chromate-phosphate binder utilizing hexavalent chromium cracked after exposure to elevated temperatures. Of course, the coating also has the disadvantage of including the environmentally unfriendly element, chromium, which presents challenges during application. While such a coating is effective at low temperatures, it has a low coefficient of expansion so that at the higher temperatures experienced by newer engines, the coating cracked, even when applied in thicknesses of as thin as 0.5-2.5 mils. In fact at thicknesses of 1.5 mils and greater, this coating delaminated after one thermal cycle at 1300°F. While the problem described has been most evident on the newer high performance engines, because of the extremes dictated by their operation, the problem is not so restricted. As temperatures continue to increase for most aircraft engines as well as other gas turbine engines, the problem will also be experienced by these engines as they cross a temperature threshold related to the materials utilized in these engines.

What is needed is a coating that can prevent corrosion of turbine engine components even when the turbine engine components are subjected to elevated operating temperatures in a wide variety of atmospheres.

According to one aspect of the present invention turbine engine components for use at the highest operating temperatures are typically made of superalloys of iron, nickel, cobalt or combinations thereof or other corrosion resistant materials such as stainless steels selected for good elevated temperature toughness and fatigue resistance. Illustrative superalloys, all of which are well-known, are designated by such trade names as Inconel^{®} , for example Inconel^{®} 600, Inconel^{®} 722 and Inconel^{®} 718, Nimonic^{®}, Rene^{®} for example Rene^{®} 88DT, Rene^{®} 104, Rene^{®} 95, Rene^{®} 100, Rene^{®} 80 and Rene^{®} 77, and Udimet^{®} , for example Udimet^{®} 500, Hastelloy, for example Hastelloy X, HS 188 and other similar alloys. These materials have resistance to oxidation and corrosion damage, but that resistance is not sufficient to protect them at sustained operating temperatures now being reached in gas turbine engines. Engine components, such as disks and other rotor components, are made from newer generation alloys that contain lower levels of chromium, and can therefore be more susceptible to corrosion attack. These engine components include turbine disks, turbine seal elements turbine shafts, airfoils categorizes as either rotating blades or stationary vanes, turbine blade retainers, center bodies, engine liners and flaps. This list is exemplary and not meant to be inclusive.

While all of the above listed components may find advantage for embodiments of the present invention, engine components such as the turbine disks, turbine seal elements and turbine shafts are not directly within the gas path of the products of combustion, and are not typically identified with corrosive products experienced as a result of exposure to these highly corrosive and oxidative gases. Nevertheless, these components have experienced higher operating temperatures and are experiencing greater corrosion effects as a result of these higher operating temperatures. Embodiments of the present invention provide a corrosion resistant coating applied to these components to alleviate or minimize corrosion problems.

Embodiments of the present invention utilize a novel coating to provide a corrosion resistant coating for engine components such as turbine disks, turbine seal elements and turbine shafts. This coating may also find application to other turbine components that are subjected to high temperatures and corrosive environments, such as turbine components located within or on the boundary of the gas fluid flow path, including for example turbine blades, turbine vanes, liners and exhaust flaps. The corrosion resistant coating of embodiments of the present invention in service on a gas turbine component include a glassy ceramic matrix, wherein the glassy matrix is silica-based, and particles selected from the group consisting of refractory oxides, MCrAlX, MCr, MAl, MCrX, MAlX and combinations of these particles, substantially uniformly distributed within the matrix. The silica-based matrix glassifies around the ceramic particles on curing, and at elevated temperatures of operation converts to a glassy ceramic. The particles provide the coating with corrosion resistance. Importantly the coating of various embodiments of the present invention has a coefficient of thermal expansion (CTE) greater than that of alumina, which spalls at elevated temperatures of operation. The CTE of the coating is sufficiently similar to the substrate material, that is, the component to which it is applied, such that the coating experiences reduced thermal stresses and does not spall after frequent engine cycling at elevated temperatures.

The coating of various embodiments of the present invention is applied to a high temperature turbine engine component that requires corrosion protection. As used herein, a high temperature turbine engine component is one that cycles through a temperature of at least about 1100°F, such as a turbine disk, seal or turbine shaft. Corrosion-resistant particles are mixed with a colloidal silica. The corrosion-resistant particles are selected from the group consisting of refractory oxide particles, MCr, MAl, MCrX, MAlX and MCrAlX particles where M is an element selected from iron, nickel and cobalt and X is an element selected from the group of gamma prime formers, and solid solution strengtheners, consisting of, for example, Ta, Re or reactive elements, such as Y, Zr, Hf, Si, La or grain boundary strengtheners consisting of B, and C and combinations thereof. The mixing is accomplished to form a slurry that can be applied to at least a portion of the surface of the component; however, it also should coat the particles substantially uniformly with the silica-based fluid. Of course, the viscosity of the slurry can be adjusted consistent with the method of application of the coating to the component surface. Before the slurry is applied to the surface of the component, the surface of the component typically is treated to enhance its adhesion. Depending on the surface, this preparation may be a mere cleaning of the surface, or it may additionally include a chemical etch or a mechanical roughening. After the slurry is applied to at least a portion of the surface of the component, it is allowed to dry. Drying is typically accomplished in two steps. In the first low temperature step, drying is accomplished to remove unbound fluid from the slurry and form a coating of preselected thickness on at least the portion of the surface of the component. An additional drying is required to remove any remaining bound fluid, or trapped fluid, from the coating slurry and to initially cure the coating onto the surface, forming a chemical and/or mechanical bond with the surface. After drying the coating is fired to a preselected temperature to form at least a glassy matrix having uniformly distributed particles. Ideally, the coating is fired to a temperature that is equal to or exceeds the temperature that the component surface is expected to experience in operation.

An advantage of the corrosion-resistant coating of various embodiments of the present invention is that it has a coefficient of thermal expansion that is compatible with many of alloys used for turbine engine articles. Thus, the coating is not limited by spalling as a result of thermal cycling resulting from large temperature changes during aircraft engine operation.

Another advantage of various embodiments of the present invention is that it can be used to provide corrosion resistance to engine components that experience cyclic temperatures in excess of 1100°F. Furthermore, various embodiments of the present invention have the ability to survive in applications that experience temperatures as high as 2100°F.

Still another advantage of the coating of various embodiments of the present invention is that the coefficient of thermal expansion can be varied by varying the amount of refractory oxides, MCrAlX, MCr, MAl, MCrX, MAlX and combinations thereof, so that the coefficient of thermal expansion can be modified to match or approach the coefficient of thermal expansion of most substrates used in aircraft engines, thereby reducing thermal stresses between the substrate and the coating. As a result, coating failure should not result from thermal cycling.

A related advantage is that the coating can be applied as multiple layers, with each layer having a different loading of refractory oxides, MCrAlX, MCr, MAl, MCrX, MAlX and combinations thereof so that each layer has a different coefficient of thermal expansion. By applying the coating as multiple layers in this manner, the interlayer stresses can be carefully controlled so that they are below the fatigue strength limit for the layers, again eliminating as a failure mechanism fatigue due to thermal cycling.

A very important advantage of various embodiments of the present invention is that it can be applied as a water-based material which is environmentally safe.

Another advantage of the coating of various embodiments of the present invention is that chromates, such as used in the phosphate based coatings, are eliminated.

Yet another advantage of various embodiments of the present invention is that it can be diluted or thickened as required for a preselected method of application, can be dried without curing, and can be partially cured without forming the thermoset bonds that characterize the glassy-ceramic. This allows a variety of methods of application to a substrate, making the material very useful. Additionally, by varying the method of application, the overall strength of the layer or strength between multiple layers can be varied, making the material very versatile.

Other features and advantages of the present invention will be apparent from the following more detailed description of the preferred embodiment, taken in conjunction with the accompanying drawings which illustrate, by way of example, the principles of the invention, in which:
FIG. 1 is a cross-sectional view of a portion of the turbine section of a gas turbine engine.
FIG. 2 is a perspective view of a turbine disk, as viewed from the front or fan portion of the engine in the direction of gas flow, showing where the corrosion resistant coating of an embodiment of this invention can be desirably located.
Figure 3 is a cross-sectional representation of a single layer of coating of an embodiment of the present invention applied to a substrate.
Figure 4 depicts coupons coated with an embodiment of the present invention before and after corrosion testing.

Figure 5 are photomicrographs of the coupons of Figure 4 before and after corrosion testing.

Various embodiments of the present invention relate to a corrosion resistant coating applied over a turbine engine component. The corrosion resistant coating comprises refractory oxide particles, MA1, MA1X, MCr, MCrX, MCrAlX particles or a combination thereof, uniformly distributed in a silicon-based matrix. The particles provide the coating with the key corrosion resistance, while the silicon-based material is the binder during application and forms the matrix after curing. On curing, the silicon-based material forms a glassy silicate matrix, which upon firing, may convert at least partially to a glassy ceramic matrix.

As used herein, the term "corrosion resistant coating" refers to coatings that, after curing of the deposited corrosion resistant coating composition of various embodiments of this invention, comprise at least one layer adjacent to the metal substrate having an amorphous, glassy matrix or glassy-ceramic matrix and having embedded therein, encapsulated therein, enclosed thereby, or otherwise adhered thereto, particles from the corrosion resistant particle component. Corrosion resistant coatings of this invention can provide resistance against corrosion caused by various corrodants, including metal (e.g., alkaline) sulfates, sulfites, chlorides, carbonates, oxides, and other corrodant salt deposits resulting from ingested dirt, volcanic ash,fly ash, concrete dust, sand, sea salt, etc., at temperatures as high as 2100°F (1150°F) and lower, although the components that the coating of various embodiments of the present invention operate typically reach temperatures of about 1500°F (815°C). It is also possible to modify the silicate glass by addition of elements to form a silicate-based ceramic having temperature capabilities in excess of 2100°F. As noted above, because of the versatility of the coating allowing it to be applied by different methods, the corrosion resistant coatings of this invention can be applied to thicknesses consistent with required engineering requirements as a monolithic layer, or can comprise a plurality of discrete layer(s) overlying the metal substrate. The discrete particles are bound in the matrix, which may be glassy or glassy-ceramic depending upon the firing temperature. Typically, if desired, a glassy top coat can be applied over the corrosion resistant layer. The top coat can be applied for any number of reasons, for cosmetic purposes, for sealing, to provide anti-stick properties so that corrosion byproducts do not adhere to the component or for surface roughness improvements. A silicate glass or phosphate (AlPO₄ or MgPO₄) glass top coat is preferred.

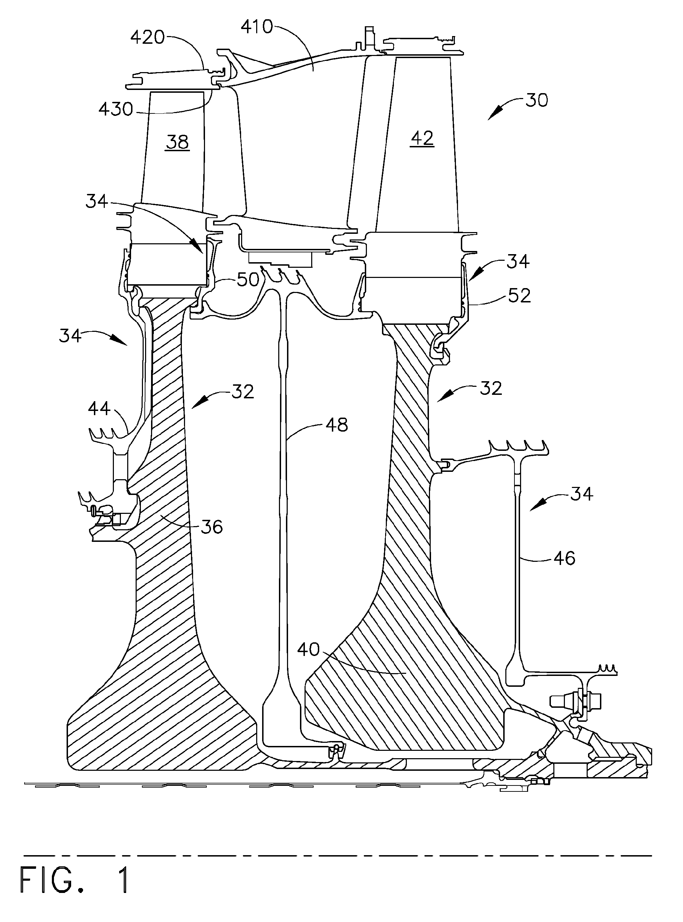

Figure 1 is a cross-sectional view depicting a portion of the turbine section of a gas turbine engine along the centerline of the engine. The turbine section 30 two stage turbine, although any number of stages may be employed depending on the turbine design. The present invention is not limited by the number of stages in the turbine. Turbine disks 32 are mounted on a shaft (not shown) extending through a bore in disks 32 along the centerline (CL) of the engine, as shown. A first stage blade 38 is attached to first stage disk 36, while second stage blade 42 is attached to second stage disk 40. A vane 410 extends from a casing 420. The inner surface of casing 420 forms a liner 430 for the hot gases of combustion which flow in the gas flow path. The first stage blade 38, the second stage blade 42 and the vane 410 extend into the hot gas flow path. The vane is stationary and serves to direct the hot gas flow while blades 38, 42 mounted on disks 36, 40 rotate as the hot gases impinge on them, extracting energy to operate the engine.

Sealing elements 34, a forward seal 44, an aft seal 46 an interstage seal seal 48, a stage 1 aft blade retainer 50 and a stage 2 aft blade retainer 52, serve to seal and complete the compressor air cooling circuits to the turbine blades and nozzles. These seals are in contact with the disks and rotate with the disks. Interstage seal 48 is positioned inboard of vane 410 and between the first stage disk 36 and the second stage disk 40. Also shown are optional blade retainers 50, 52 which lock the blades to the disks. The design of such retainers will vary dependent on engine design, with some engine designs not requiring them.

These seals and blade retainers are heated to the temperatures of the cooling circuit air they direct. In addition, the parts closest to the combustion path are also heated by conducive heat transfer from the combustion path parts. For example, the rim of the turbine disks are conductively-heated by the turbine blades. Contaminants in the cooling air, as previously discussed, deposit on the surfaces of the disks, seals and retainers that form the cooling cavities and are the source of contamination at these elevated temperatures. Thus, the present invention can provide protection to any of these surfaces that are subject to corrosion as a result of corrosion due to deposition or accumulation of the cooling air contaminants.

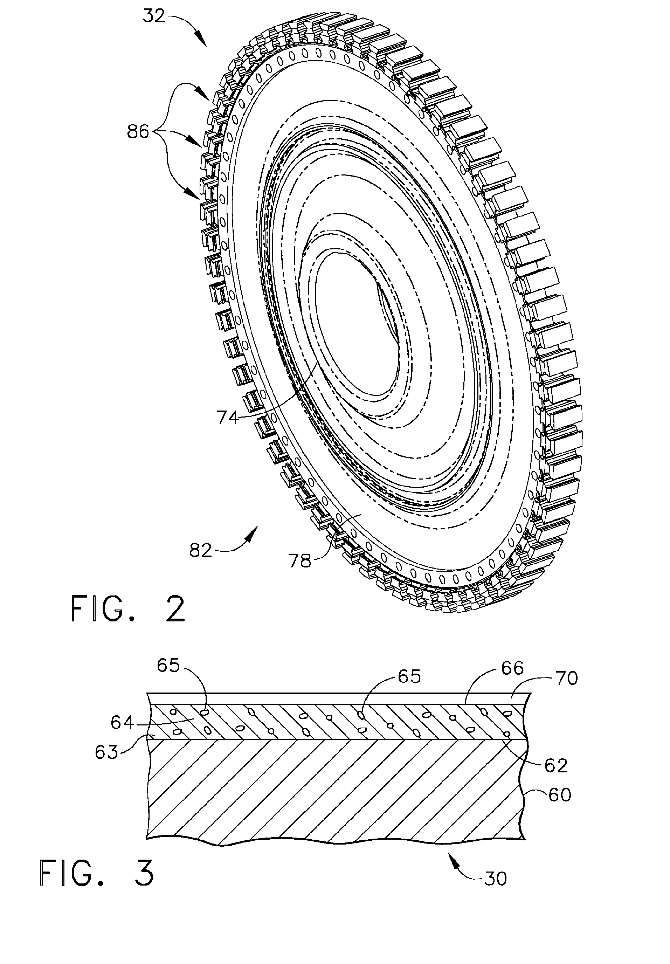

Figure 2 is a perspective view of a typical gas turbine engine disk 82 such as disk 36 or 40 of Figure 1 which is typically made of a superalloy material, such as one of the superalloy materials previously discussed. The disk 82 includes a hub 74 along typically the engine centerline that includes a bore through which a shaft (not shown) extends. The disk includes dovetail slots 86 along the disk outer periphery into which the turbine blades are inserted. A web section 78 of the disk 82 extends between the outer periphery, where the dovetail slots are located, and the hub. While various embodiments of the present invention may be utilized anywhere along disk 82, including the dovetail slots, it finds particular use along the surfaces of web section 78 and the dovetail slots 86, which unlike the bore in hub 74, is directly exposed to the high temperature cooling air.

Figure 3 depicts, in cross-section, the coating of various embodiments of the present invention in its simplest form, deposited on an engine component. Corrosion resistant coating 64 is deposited on the surface 62 of substrate 60. The substrate 60 may be a turbine engine disk such as first stage disk 36 or second stage disk 40. The substrate 60 may be a typical surface such as web section 78 of a turbine disk 82. If desired substrate 60 comprising in superalloy based on nickel, cobalt. iron and combinations thereof may also include a compliant coating over substrate surface 62, such as a MCrAlX coating, for example a NiCrAlY, a NiCoCrAlY,an aluminide such as NiAl or noble metal-modified aluminide such as (Pt,Ni)Al. As discussed previously, coating 64 can be cured as a single layer of graded coating and surface 66 is exposed to the cooling air forming the environment for the surface. Alternatively coating 64 may be of substantially uniform composition. If the coating is to be graded, then additional layers are applied over coating layer 64, the first layer being applied over outer surface 66 and additional layers being applied over subsequent outer layers.

Prior to forming the corrosion resistant coating 64 of this embodiment of invention on the surface 62 of metal substrate 60, metal surface 62 is typically pretreated mechanically, chemically or both to make the surface more receptive for coating 64. Suitable pretreatment methods include grit blasting, with or without masking of surfaces that are not to be subjected to grit blasting (see U.S. Patent 5,723,078 to Nagaraj et al, issued March 3, 1998, especially col. 4, lines 46-66, which is incorporated by reference), micromachining, laser etching (see U.S. Patent 5,723,078 to Nagaraj et al, issued March 3, 1998, especially col. 4, line 67 to col. 5, line 3 and 14-17, which is incorporated by reference), treatment with chemical etchants such as those containing hydrochloric acid, hydrofluoric acid, nitric acid, ammonium bifluorides and mixtures thereof, (see, for example, U.S. Patent 5,723,078 to Nagaraj et al, issued March 3, 1998, especially col. 5, lines 3-10; U.S. Patent 4,563,239 to Adinolfi et al, issued January 7, 1986, especially col. 2, line 67 to col. 3, line 7; U.S. Patent 4,353,780 to Fishter et al, issued October 12, 1982, especially col. 1, lines 50-58; and U.S. Patent 4,411,730 to Fishter et al, issued October 25, 1983, especially col. 2, lines 40-51, all of which are incorporated by reference), treatment with water under pressure (i.e., water jet treatment), with or without loading with abrasive particles, as well as various combinations of these methods. Typically, the surface 62 of metal substrate 60 is pretreated by grit blasting where surface 62 is subjected to the abrasive action of silicon carbide particles, steel particles, alumina particles or other types of abrasive particles. These particles used in grit blasting are typically alumina particles and typically have a particle size of from about 600 to about 35 mesh (from about 25 to about 500 micrometers), more typically from about 360 to about 35 mesh (from about 35 to about 500 micrometers).

When additional layers of coating are to be applied over surface 66 in order to obtain a graded, multi-layer coating, it is generally not necessary prepare coating surface 66 prior to application of additional layers.

While the above provide examples of preferred usages for the coating of various embodiments of the present invention, the invention is not so limited and may be used in any application where corrosion of base metal is evident. Various embodiments of the present invention may be applied as a coating in thicknesses of from about 0.0001" (0.1mils) to about 0.005" (5 mils), and preferably in thicknesses from about 0.0005" (0.5 mils) to about 2.5". The coating can be applied to such thicknesses as a single layer, or can be applied as a plurality of distinct layers to achieve an overall thickness in these ranges.

The coating is applied to form a silicon-based matrix having corrosion resistant particles substantially uniformly dispersed throughout. The corrosion resistance is provided by particles of refractory oxide, MCrAlX or combinations of these particles. The silicon-based matrix can be formulated in any one of a number of ways. However, a water-based system utilizes colloidal silica. This is a preferred system wherein the viscosity can be adjusted by adding water or allowing water to evaporate in order to obtain the desired viscosity. In one best mode of practicing the present invention, the viscosity is achieved by selecting one of several available colloidal silica solutions. These solutions include the LP series, available from Dupont Corp., Wilmington, Delaware, such as LP10, LP20 and LP-30. LP10 includes by weight (INVENTORS: IS THIS WEIGHT OR VOLUME?) 10% silica solids and the balance water. LP20 includes 20% silica solids and the balance water. LP30 includes 30% silica solids and the balance water. The viscosity of the solution will be determined by the solids/binder ratio and the desired method of application.

Next, the corrosion resistant particles are added to the silica solution. These particles may include refractory oxide particles that can impart corrosion resistance to a coating, such as alumina, yttrium oxide (Y₂O₅), zirconium oxide (Zr₂O₃), titanium oxide (TiO₂) and combinations thereof. Other suitable materials include ceramics with a CTE greater than that of alumina and that are relatively inert or non-reactive. While oxides of other metals may be used, such as tungsten, chromium and rhenium, these are not preferred as they are not to be deemed to be as environmentally as friendly as the preferred refractory oxides. Alternatively, MCrAlX, MCr, MAl, MCrX or MAlX particles may be added to the solution, either alone or in combination with the refractory oxide particles to provide a layer with a predetermined CTE. The particles are added to the solution of colloidal silica so that the particles comprise, by weight, from 5-60% of the total solution, up to 15% surfactant and the balance being one of the LP colloidal silica solutions. Thus, for example, for an LP30 colloidal solution, when particles are added to about 30% by weight, about 21% by weight comprises silica so lids, up to 10% is a surfactant and the balance of the solution, about 49% comprises water. The particles are provided in a size range of 25 microns and smaller. The particles may be substantially equiaxed (spherical) or non-equiaxed (flake). Preferably the particles are 10 microns and smaller in size. If a high particle density is desired, the particles should be provided in at least two sizes. In such a circumstance, the average particle size preferably should differ by a factor of about 10. The size difference between the particles allows the smaller particles to fill the areas between the larger particles. This is particularly evident when the particles are substantially equiaxed. Thus, if high packing density is required and the size of particles is about 5 microns, then a second size range of particles should also be included wherein the particles are 0.5 microns and smaller. The packing density of the particles will have some effect on the CTE of the layer.

One preferred composition is identified as LBK-51F, which comprises , in weight percent, about 10% Triton™-X surfactant, about 22.5% LUCALOX^{®} alumina, the balance, about 67.5% , being colloidal silica. A second preferred composition is LBK-51G, comprising, in weight percent, about 2% surfactant, about 24.5% alumina, -325 mesh that is acid washed and the balance, about 73.5%, colloidal silica. Both preferred compositions were applied by spraying. LUCALOX^{®} is a registered trademark of General Electric Company, Fairfield Connecticut, and LUCALOX^{®} alumina is a polycrystal alumina available from the same company. The Triton™-X series surfactants are nonionic octylphenol ethoxylate-type surfactants recognized for their wetting an detergency available from Dow Chemical.

After the corrosion resistant particles have been added to the solution to form a slurry, the slurry viscosity is adjusted by either adding liquid or adding additional particles to the mixture. The pH of the slurry is slightly basic, being in the range of about 3.5-4.5, typically about 4.0. Surfactants and dispersants may be added to the slurry when required. The viscosity should be adjusted, if required, to be consistent with the intended method of application. If the slurry is to be sprayed, the viscosity should be adjusted to be very low, whereas if the slurry is to be applied as a gel, using for example a doctor blade to adjust the thickness, then liquid should be removed so that the slurry does not flow readily. Even more liquid should be removed if the slurry is to be formed into a tape. In the last two examples, the final viscosity adjustment may be made after mixing is complete. Regardless of the intended method of application, the mixture is thoroughly agitated. Agitation can be accomplished by any convenient method for about 0.5-5 hours. Preferably, mixing is accomplished for a period of about 1-2 hours. This is an important step, for it is not only important that the particles be uniformly and thoroughly distributed throughout the slurry, it is also important that the solution completely wet or coat the particles. Depending on the particles, it is believed that the surfaces of the particles become hydrolyzed, which, as will be discussed, will allow bonding with the hydrolyzed silica-based material.

In a preferred embodiment, the viscosity is adjusted so that the slurry can be applied by spraying. In this circumstance, the slurry is continuously agitated by placing it on a ball mill until it is ready for application. Even as the slurry is sprayed, the slurry can be pneumatically agitated by using a pot on a spray gun. The slurry is applied by using a Bosch spray gun having an adjustable orifice. The orifice size must be larger than the largest particles in the slurry. The slurry is sprayed at a pressure of about 20-60 psi. The coating is applied to a preselected thickness, with a larger orifice being selected when a thicker coating is desired.

After the mixture is applied to the surface of the component it is allowed to dry. Drying is accomplished in two steps. In the first step, drying is accomplished to remove unbound water. This is accomplished after application of the mixture, either as a spray coating a gel or a paste, to the surface of the component, preferably by raising the temperature to below 212°F (100°C), or by reducing the humidity to below 30% relative humidity. It will be recognized by those skilled in the art that higher humidities and/or lower temperatures will also provide drying, but will require longer times to achieve the necessary drying. When the coating is applied to a thickness of 0.001" (one mil) or greater, heating must be accomplished at a rate of no greater than about 5-15°F/min. to prevent blistering. Next, the coating is heated to a temperature of about 400°F or higher to drive off unbound water and cure the material.

Firing the coated substrate to an elevated temperature above the curing temperature convert the at least a portion of the glass coating into a glassy ceramic with substantially uniformly dispersed particles dispersed therein. Preferably, firing is accomplished at a temperature at or above the expected operating temperature of the component. A preferred firing cycle is 1000°F for 30 minutes at a rate of about 10°F per minute. The coating may be fired up to about 2100°F.

A graded or layered coating may be achieved by applying additional layers over the first layer and subsequent layers, each subsequent layer applied after drying to remove unbound water. Of course, each layer is adjusted to have a different loading of particles and or particles of different compositions, the loading and type of particles determining the CTE of the layer. If the graded coating is applied in this manner, there may be some mixing of the loadings at the interface between layers. On curing, there will be strong bonding between the layers, and except for the loadings and/or types, the coating will act as a uniform coating. Since the CTE can be tailored with thickness, the resulting stresses and strains can be designed as a function of coating thickness. This permits, if desired, the use of a highly corrosion resistant, low CTE particle such as alumina, in a coating layer, which layer can be applied over a less corrosion resistant, higher CTE coating layer, such as a layer that includes CoNiCrAlY particles without negatively affecting the adhesion of the coating to the substrate.

The coating of various embodiments of the present invention is comprised of a silica matrix 63 having substantially uniformly dispersed particles 65 of R and R₁ within the matrix in Figure 3. While R and R₁ may be any of the corrosion resistant refractory oxide, MCr, MCrX, MAl, MAlX or MCrAlX particles, here R represents CoNiCrAlY particles and R₁ represents zirconia particles. The CoNiCrAlY particles are depicted as surrounded by the silica matrix. The dispersed zirconia particles and the CoNiCrAlY particles provide the coating with corrosion resistance. The particle composition or combination of particles of various compositions are selected to provide a sufficiently similar CTE between the coating 64 and the substrate 60, while preventing spalling. If the required level of corrosion resistance and required CTE could not be achieved, then intermediate layers having intermediate CTE's could be applied over the substrate and below the layer having the required corrosion resistance. Also shown overlying coating 64 is outer layer 70. Outer layer 70 is a glass silicate layer that is bonded to coating 64. In this embodiment, glass silicate layer is provided as a cosmetic layer. The mechanical bonding between the layers is relatively weak. Here, optional layer 70 is designed to protect coating 64 during shipping and installation. It is, in fact, designed to spall along the interface 68 between the layers shortly after the component is placed into service and subjected to cyclic thermal stresses. However, layer 70 can be designed as a sealing layer or to be more strongly bonded to the substrate, as required, and discussed above.

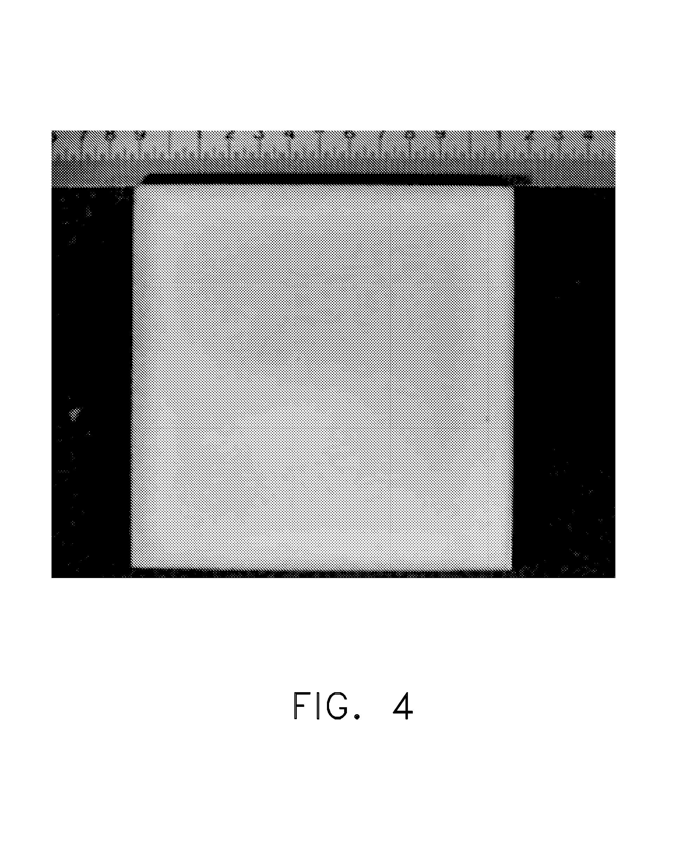

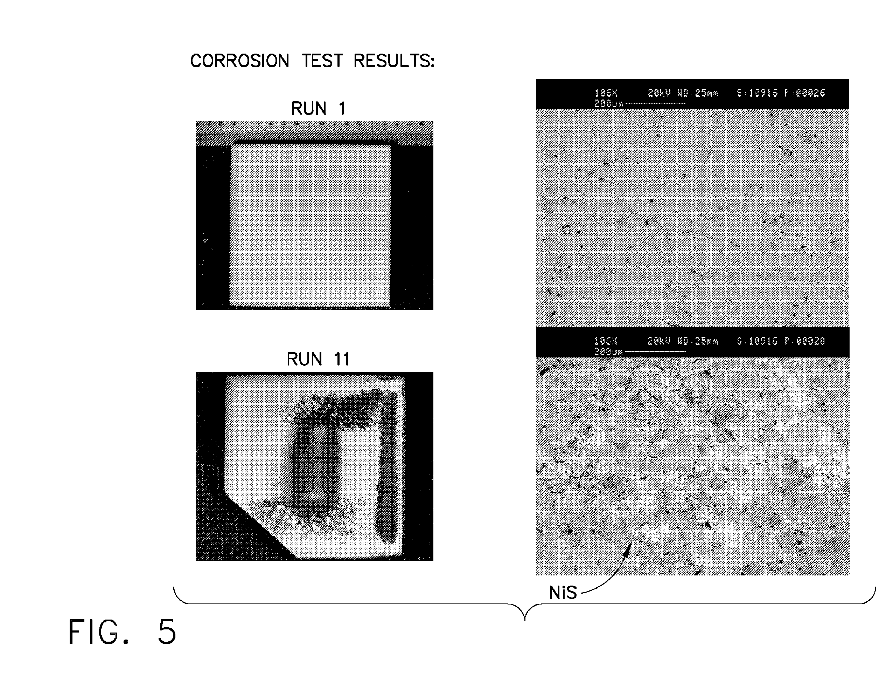

Figure 4 depicts a RENE® 88 coupon coated with a coating of alumina particles dispersed in a silica matrix. The coupon was 1¼" x 1¼" The coating was applied by spraying a slurry of alumina particles suspended in a colloidal silica binder followed by processing, including drying, firing and curing as previously described The coupons were subjected to a rotor corrosion test which entails exposing the coupon to corrosive material experienced by gas turbine engines and cycling the coupon through temperatures of 1300°F. Run 1 depicts the coupon after one cycle of the rotor corrosion test, while Run 11 depicts 11 such cycles. Figure 5 is a photomicrograph of the coupon of Figure 4 after one cycle and after 11 cycles of corrosion testing. As depicted, after 11 cycles of the corrosion test, NiS/NiO corrosion is shown forming on the coating. This is an improvement of 4 times over uncoated Rene® 88 and is equivalent to the corrosion protection provided by the prior art coating. However, unlike the prior art coating, the coating of various embodiments of the present invention, having a CTE that more closely matches that of the substrate, is not expected to spall and incorporates a binder that is free of hexavalent chromium. While the invention has been described with reference to preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the preferred mode contemplated for carrying out this invention, but that the invention will include all embodiments falling within the scope of the appended claims.

### PARTS LIST

Fig. 1

| | |
|---|---|
| 30 | Turbine section |
| 32 | Turbine disks |
| 34 | Sealing elements |
| 36 | First stage disk |
| 38 | First stage blade |
| 40 | Second stage disk |
| 42 | Second stage blade |
| 410 | Vane |
| 44 | Forward seal |
| 46 | Aft seal |
| 48 | Interstage seal |
| 50 | stage 1 aft blade retainer |
| 52 | Stage 2 aft blade retainer |
| 420 | Casing |
| 430 | Liner |

Fig. 2

| | |
|---|---|
| 74 | Hub |
| 76 | |
| 78 | Web section |
| 80 | |
| 82 | Disk |
| 84 | |
| 86 | Dovetail slots |

Fig. 3

| | |
|---|---|
| 60 | Substrate |
| 62 | Substrate surface |
| 63 | matrix |
| 64 | Coating |
| 65 | Particles |
| 66 | surface |
| 68 | interface |
| 70 | Outer layer |

## Claims

1. A corrosion resistant turbine engine component comprising: a turbine engine component (60), and at least one layer of a coating (64) resistant to corrosion overlying at least a portion of the engine component(60), the coating (64) comprising: a glassy matrix (63); and refractory oxide particles (65), wherein the glassy matrix (63) is silica, and wherein the refractory oxide particles (65) are substantially uniformly distributed within the matrix (63) and are selected to provide the coating (64) with a preselected coefficient of thermal expansion, and wherein the coating (64) is corrosion resistant.

2. The component (60) of claim 1 wherein the coating matrix (63) is a glassy-ceramic matrix.

3. The component (60) of claim 1 or claim 2 wherein the refractory oxide particles (65) are selected from the group consisting of Al₂O₃, Y₂O₃, Zr₂O₃, Ti₂O₃ and combinations thereof.

4. The component (60) of any preceding claim wherein the predetermined coefficient of thermal expansion of the coating (64) is greater than the coefficient of thermal expansion of a layer of alumina.

5. The component (60) of any preceding claim wherein the coating (64) further includes metal particles selected from the group consisting of MAl, MAlX, MCr, MCrX, MCrAlX particles and combinations thereof, where M is an element selected from nickel, iron cobalt and combinations thereof and X is an element selected from the group consisting of La, Ta, Re, Y, Zr, Hf, Si, B, C and combinations thereof, the metal particles being substantially uniformly distributed within the matrix (63) to provide the coating (64) with a predetermined coefficient of thermal expansion.

6. A method of applying a corrosion resistant coating (64) to a turbine engine component (60), comprising the steps of: providing a turbine engine component (60); providing a fluid comprising a colloidal silica and optionally a surfactant; providing corrosion-resistant particles (65) selected from the group consisting of refractory oxide, MAl, MAlX, MCr, MCrX, MCrAlX and combinations thereof, wherein M is an element selected from nickel, iron cobalt and combinations thereof and X is an element selected from the group consisting of La, Ta, Re, Y, Zr, Hf, Si, B, C and combinations thereof; mixing the particles (65) with the fluid to form a slurry in which the fluid substantially uniformly coats the particles;applying the slurry to at least a portion of the surface (62) of the component (60); drying the slurry to remove unbound water to form a coating (64) of preselected thickness on at least the portion of the surface (62) of the component (60); further drying the coating (64) of preselected thickness by heating to a preselected temperature at a preselected heating rate to remove any remaining bound water and to initially cure the coating (64) on at least the portion of the surface (62) to which it was applied; firing the coating (64) at a preselected temperature to form to form a first layer comprising at least a glassy matrix (63) having uniformly distributed particles (65), the first layer having a predetermined coefficient of thermal expansion.

7. The coating of claim 6 comprising the additional steps of: mixing particles (65) with a fluid to form a second slurry in which the fluid substantially uniformly coats the particles, a composition of the second slurry being different from a composition of the slurry forming the layer; applying the second slurry to at least a portion of the first layer; drying the second slurry to remove unbound water to form a second coating (70) of preselected thickness on at least the portion of the first layer; further drying the second coating of preselected thickness by heating to a preselected temperature at a preselected heating rate to remove any remaining bound water and to initially cure the second coating on at least the portion of the first layer to which it was applied; firing the second coating (70) at a preselected temperature of at least about 1000°F to form to form a second layer overlying the first layer comprising at least a glassy matrix (63) having uniformly distributed particles (65), the second layer having a second predetermined coefficient of .thermal expansion different from the coefficient of thermal expansion of the first layer.

8. The method of claim 6 or claim 7 wherein the steps of providing a fluid comprising colloidal silica, optionally a surfactant and corrosion resistant particles (65) includes providing, in weight percent, up to 15% surfactant, about 5-60% particles and the balance colloidal silica.

9. The method of any one of claims 6 to 8 wherein the step of providing particles (65) further includes providing particles (65) in the size range of 25 microns and smaller.

10. The method of claim 9 wherein the step of providing particles (65) includes providing particles (65) in at least two size ranges, the average sizes of the provided particles differing by a factor of about 10.
